# EUROPÄISCHE PATENTSCHRIFT

(11) **EP 2 522 935 B1**
(45) Veröffentlichungstag und Bekanntmachung des Hinweises auf die Patenterteilung: **14.01.2015**
(21) Anmeldenummer: 12166747.1
(22) Anmeldetag: 04.05.2012
(51) Int. Cl.: F25D 3/11, B01J 2/06

(54) **Vorrichtung zum Pelletieren oder Granulieren eines flüssigen oder pastösen Stoffes**
Device for pelletising or granulating a fluid or paste material
Dispositif de pelletisation ou de granulation d'une matière liquide ou pâteuse

(30) Priorität: 07.05.2011 DE 102011100878
(43) Veröffentlichungstag der Anmeldung: 14.11.2012
(73) Patentinhaber: Messer Group GmbH, 65812 Bad Soden (DE); Messer Industriegase GmbH, 65812 Bad Soden (DE)
(72) Erfinder: Moser, Friedrich, 47167 Duisburg (DE); Kosock, Stefan, 47805 Krefeld (DE)
(74) Vertreter: Münzel, Joachim R.

(56) Entgegenhaltungen:
- DE-A1- 10 012 551
- DE-A1-102009 048 321
- US-A- 5 878 582

## Beschreibung

Die Erfindung betrifft eine Vorrichtung zum Pelletieren oder Granulieren eines flüssigen oder pastösen Stoffes mit einem kryogenen Kühlmittel, mit einer Fördereinrichtung, mittels der das kryogene Kühlmittel zu einer geneigten Rinnenanordnung transportiert wird, einer Eintragvorrichtung, mittels der im Betriebszustand der Vorrichtung der zu pelletierende Stoff in den durch die Rinnenanordnung fließenden Strom des Kühlmittels eingetragen wird, und mit einer Trenneinrichtung zum Trennen des pelletierten oder granulierten Stoffes vom Kühlmittel.

Bei Vorrichtungen dieser Art wird ein Produkt, beispielsweise ein flüssiges Lebensmittel oder ein pharmazeutisches Produkt, in ein Bad oder einen Strom aus einem kryogenen Kühlmittel eingetropft. Als "kryogenes Kühlmittel" wird im Folgenden ein verflüssigtes Medium verstanden, dessen Temperatur deutlich unterhalb der Schmelztemperatur des eingetropften Produkts beträgt, insbesondere Flüssigstickstoff oder ein anderes tiefkalt verflüssigtes Gas.

Ein Beispiel für eine gattungsgemäße Vorrichtung ist aus der US 4,655,047 A bekannt. Gefrorene Pellets eines flüssigen Lebensmittels, beispielsweise Flüssigei, werden erzeugt, indem das Lebensmittel durch eine Düse oder eine Mehrzahl an Düsen in den Flüssigkeitsstrom eines kryogenen Kühlmittels eingetropft wird, der durch eine abfallend geneigte Rinne läuft. Im Strom des kryogenen Kühlmittels gefrieren die Tropfen des flüssigen Lebensmittels zumindest an ihrer Oberfläche zu formstabilen Teilchen (Pellets), die anschließend mittels eines Rüttelsiebs vom kryogenen Kühlmittel getrennt werden. Das kryogene Kühlmittel wird zurückgeführt und steht erneut dem Kühlprozess zur Verfügung, während die Pellets über das Sieb in einen Sammelbehälter befördert werden. Problematisch bei diesem Gegenstand ist, dass die Fließmittelstrecke relativ groß bemessen sein muss, um eine hinreichende Verweilzeit und eine hinreichende Durchkühlung des flüssigen Lebensmittels im kryogenen Medium zu erreichen. Zudem ist der Einsatz des Rüttelsiebes bei den tiefen Temperaturen des kryogenen Mediums von bis zu -196°C nicht unproblematisch.

Um dem Problem der langen Kühlstrecke zu begegnen wird in der EP 0 919 279 B1 vorgeschlagen, der rinnenförmigen Kühlstrecke, in der der zu pelletierende Stoff mittels des flüssigen kryogenen Mediums angefroren wird, eine weitere Förderstrecke in Gestalt eines in einem Tunnel eingehausten Förderbandes nachzuschalten, mit dem zum einen die erzeugten Pellets vom flüssigen Kühlmedium getrennt werden und zum anderen eine weitere Kühlung der Pellets durch verdampfendes Kühlmittel erfolgt. Die Pellets werden erst in der Förderstrecke vollständig durchgefroren, wodurch die Rinnenanordnung für das flüssige kryogene Medium relativ kurz gehalten werden kann. Nachteilig bei diesem Gegenstand ist, dass die Verwendung eines Förderbandes als Trenneinrichtung einen hohen Wartungsaufwand mit sich bringt, da ein Förderband nur schwer zu reinigen und zu sterilisieren ist.

Um der Problematik des Einsatzes beweglicher Teile bei der Temperatur des flüssigen Stickstoffs zu umgehen wird in der DE 100 12 551 A1 vorgeschlagen, die vollständig durchgefrorenen Pellets nach ihrer Herstellung in einer mit Flüssigstickstoff gefüllten Wanne einer um einen bestimmten Winkel geneigten Rinne zuzuführen, in der die Pellets nur zu einem Teil vom flüssigen Stickstoff bedeckt sind. Die Pellets treiben im Strom des Flüssigstickstoffs bis zum Ende der Rinne und werden aufgrund der Neigung der Rinne beschleunigt. Am Ende der Rinne überwinden sie eine gewisse freie Flugstrecke, um anschließend von einer zweiten, horizontal von der ersten Rinne beabstandeten Rinne aufgefangen zu werden. Aufgrund von Adhäsionskräften vermag der Flüssigstickstoff den Pellets nicht zu folgen und wird zwischen den beiden Rinnen in einem Behälter aufgefangen, wodurch eine Trennung von Pellets und Stickstoff erfolgen soll.

Die zuvor beschriebenen Gegenstände weisen den Nachteil auf, dass die in der Regel fest installierte Kühlrinne zu einer fest definierten Verweilzeit des Produkts im flüssigen Kühlmittel führt. In einigen Bereichen, wie beispielsweise in der Biotechnologie oder der Pharmazie, werden jedoch zunehmend flexible Anforderungen an die zu erbringende Kühlleistung gestellt. So sollen in einer Apparatur unterschiedliche Stoffe mit unterschiedlichen physikalischen oder chemischen Eigenschaften und demzufolge mit einem unterschiedlichen Gefrierverhalten gekühlt werden. Dies führt bei den Vorrichtungen nach dem Stande der Technik zwangsläufig dazu, dass nicht alle zur Kühlung vorgesehenen Produkte gleich gut gekühlt werden können.

Um diesem Nachteil zu begegnen wird in der DE 10 2009 048 321 A1 ein System mit einer Kühlrinne vorgeschlagen, die aus verschiedenen Bauteilen zusammengesetzt ist. Die gefrierenden Pellets durchlaufen eine Siebinne, die mit Öffnungen ausgerüstet ist, die für das Kühlmittel durchlässig, für die gefrorenen Pellets jedoch undurchlässig ist. Die Siebrinne ist in einer für das Kühlmittel undurchlässigen Wanne aufgenommen, die aus mehreren Segmenten zusammengesetzt ist, welche unabhängig voneinander in vertikaler Richtung verfahren werden können. In einem ersten Betriebszustand liegen Siebrinne und Wannensegment eng beieinander und die Pellets sind vollständig vom Kühlmittelstrom umgeben. In einem zweiten Betriebszustand befindet sich das Wannensegment in einer zur Siebrinne beanstandeten Position und Kühlmittel und Pellets werden voneinander getrennt. Durch Änderung der Anzahl der Segmente in den beiden Betriebszuständen kann die Länge des Abschnitts, in dem die Pellets vom Kühlmedium vollständig umströmt werden, variiert werden. Diese Anordnung hat sich bewährt, ist jedoch recht aufwändig im Aufbau.

Der Erfindung liegt somit die Aufgabe zugrunde, eine Vorrichtung zur Herstellung von Pellets mittels eines kryogenen Mediums bereitzustellen, bei der die Dauer des Kontaktes von Kältemedium und Produkt variiert werden kann, und die einfach im Aufbau ist und Wartung ist.

Gelöst ist diese Aufgabe bei einer Vorrichtung der eingangs genannten Art und Zweckbestimmung dadurch, dass die Rinnenanordnung aus in Strömungsrichtung des Kühlmittels aufeinanderfolgenden Segmenten aufgebaut ist und jeweils zwischen zwei Segmenten der Rinnenanordnung eine Einrichtung zum Auskoppeln des pelletierten oder granulierten Stoffes aus der Rinnenanordnung vorgesehen ist.

Bei der erfindungsgemäßen Vorrichtung wird das zu pelletierende Produkt beispielsweise in einen laminaren Strom des flüssigen Kühlmittels an einer Stelle stromabwärts von der Fördereinrichtung, die das Kühlmittel der Rinnenanordnung zuführt, eingetragen, beispielsweise eingetropft. Bei der Fördereinrichtung handelt es sich beispielsweise um eine Pumpe, ein Bechersystem oder eine archimedische Schraube. Dabei sollte dafür Sorge getragen werden, dass die Strömung an der Eintragsstelle laminar ist. Der Eintrag des in der Regel flüssigen oder pastösen Stoffes erfolgt beispielsweise so, wie in US 4 655 047 A beschrieben, worauf hiermit Bezug genommen wird. Die Rinnenanordnung umfasst mehrere - in Strömungsrichtung des Kühlmittelstromes gesehen - aufeinanderfolgende Segmente in Form einer zumindest nach unten (im geodätischen Sinne) geschlossenen Rinne, in der die eingebrachten Tropfen des Produkts teilweise oder vollständig von einem Strom des flüssigen Kühlmittels umspült werden können. Zwischen jeweils zwei der räumlich voneinander beabstandeten Segmenten ist eine Einrichtung zum Auskoppeln des pelletierten oder granulierten Stoffes vorgesehen, die zwei Betriebszustände aufweist. In einem ersten Betriebszustand stellt die Einrichtung zum Auskoppeln eine Strömungsverbindung zwischen beiden Rinnensegmenten her, während in einem zweiten Betriebszustand die Pellets und/oder der aus Kühlmittel und Pellets bestehende aus der Rinnenanordnung fort geleitet und der weiteren Verarbeitung zugeführt wird. Beim Einsatz der erfindungsgemäßen Vorrichtung wird der pelletierte oder granulierte Stoff also wahlweise entweder nach Durchlaufen des strömungstechnisch vorderen Rinnensegments aus der Rinnenanordnung entfernt und (gleichzeitig oder unmittelbar darauf anschließend) vom Kühlmittelstrom getrennt, oder der granulierte Stoff durchläuft auch das strömungstechnisch hintere Rinnensegment zusammen mit dem Kühlmittelstrom und wird in einer darauffolgenden Einrichtung zum Auskoppeln entfernt, oder er durchläuft die vollständige Rinnenanordnung. Auf diese Weise ermöglicht es die Erfindung in sehr einfacher Weise, die effektive Rinnenlänge, d.h. die Länge des Bereiches, in dem der zu pelletierende oder granulierende Stoff in der Rinnenanordnung vom Strom des Kühlmittels mitgeführt wird, und damit die Verweildauer des Stoffes im Kühlmittel zu variieren und den jeweiligen Erfordernissen anzupassen.

Die Länge der einzelnen Segmente ist dabei grundsätzlich frei wählbar. Die Segmente können gleiche oder unterschiedliche Längen aufweisen und auch ihrerseits in Segmenten unterteilt sein. Zweckmäßigerweise sollte der Ort der - in Strömungsrichtung des Kühlmittels gesehen - ersten Anordnung zum Auskoppeln so gewählt werden, das der zu pelletierende Stoff bei Erreichen dieser Einrichtung bereits soweit abgekühlt wurde, dass zumindest die äußere Hülle der Produkttropfen gefroren und damit die in der Regel kugelige Form des eingetragenen Stoffes fixiert wird.

An die Rinnenanordnung schließt sich eine Trenneinrichtung an, mittels der der pelletierte oder granulierte Stoff vom Kühlmittel getrennt wird. Der Begriff "Trenneinrichtung" ist hier allgemein zu verstehen und beinhaltet sowohl eine Einrichtung, die einer Mehrzahl oder allen der Einrichtungen zum Auskoppeln zugeordnet ist, als auch eine Mehrzahl von Trenneinrichtungen, die sich jeweils an eine der Einrichtungen zum Auskoppeln anschließen. Das in der Trenneinrichtung vom pelletierten oder granulierten Stoff abgetrennte Kühlmittel steht anschließend einer weiteren Verwertung, insbesondere der Rückführung zur Fördereinrichtung zur Verfügung. Zweckmäßigerweise ist die Trenneinrichtung so ausgebildet, dass der vom verflüssigten kryogenen abgetrennte granulierte oder pelletierte Stoff von einer kalten Atmosphäre verdampften Kühlmittels umströmt wird, die idealerweise zu einer völligen Durchkühlung der Pellets führt.

Die Trenneinrichtung kann zweckmäßigerweise auch in der Einrichtung zum Auskoppeln des pelletierten oder granulierten Stoffes integriert sein, indem beispielsweise die Pellets in der Rinne aufgefangen und der weiteren Verarbeitung zugeführt werden, während das Kühlmittel weiter die Rinnenanordnung durchläuft. Als Trenneinrichtung kommt in diesem Falle beispielsweise ein verschwenkbar montiertes Siebmittel zum Einsatz, das in einem ersten Betriebszustand in die Rinnenanordnung eintaucht und die Pellets auffängt, während es in einem zweiten Betriebszustand in eine von der Rinnenanordnung abseitige Position verschwenkt werden kann. Eine in der Einrichtung zum Auskoppeln integrierte Trenneinrichtung kann auch ergänzend zu einer weiteren Trenneinrichtung vorgesehen sein, um eine zuverlässige Trennung von Pellets und Kühlmittel zu gewährleisten.

Als Einrichtungen zum Auskoppeln des pelletierten und granulierten Stoffen aus der Rinnenanordnung können alle Mittel zum Einsatz kommen, mittels denen eine verstellbare Umlenkung der durch die Rinnensegmente geführten Pellets oder Granulate aus der Rinnenanordnung möglich ist. Eine im Aufbau besonderes einfache und wartungsfreundliche Einrichtung zum Auskoppeln besteht in einer Stellklappe, die zwischen zwei Rinnensegmenten derart angeordnet ist, dass in einer ersten Stellposition das Kühlmittel und der darin aufgenommene Stoff durch beide Rinnensegmente geführt werden, während in einer zweiten Stellposition der Stellklappe Kühlmittel und Stoff nach Durchlaufen des in Strömungsrichtung gesehen vorderen vorderen Rinnensegments unmittelbar zur Trenneinrichtung gefördert werden, in der die Trennung von Stoff und flüssigem kryogenen Kühlmittel erfolgt. Dabei können die Stellklappen auch so beschaffen sein, dass sie zugleich eine Trennung vom flüssigen kryogenen Kühlmittel bewirken. Beispielsweise können sie mit geeigneten Sieböffnungen ausgerüstet sein, die für das Kühlmittel durchlässig, für die Pellets jedoch undurchlässig sind.

Eine besonders raumsparende Bauweise der erfindungsgemäßen Vorrichtung wird dadurch erzielt, dass die Segmente der Rinnenanordnung in einer Zick-Zack-förmigen Anordnung übereinander vorgesehen sind. Die Einrichtungen zum Auskoppeln sind dabei im den jeweiligen Knickstellen des Zick-Zack-förmigen Verlaufs vorgesehen und vorteilhafterweise vertikal übereinander angeordnet. Besonders bevorzugt ist in diesem Falle eine sich geodätisch unterhalb der Rinnenanordnung angeordnete Trenneinrichtung vorgesehen, die sich über die volle Länge und Breite der Rinnenanordnung erstreckt, sodass bei Betätigung einer jeden der Einrichtungen zum Auskoppeln der gesamte Strom aus Kühlmittel und Pellets von der Trenneinrichtung aufgenommen und dort getrennt wird.

Alternativ oder ergänzend zum vorerwähnten Zick-Zack-förmigen Aufbau ist in einer bevorzugten Ausführungsform die Rinnenanordnung als eine sich um eine im Wesentlichen vertikale Achse windende Spirale ausgebildet. Die Rinnenanordnung bzw. die Segmente der Rinnenanordnung verlaufen also auf einer - von der Eintragseinrichtung aus betrachtet - nach unten verlaufenden Spirale. Diese Ausgestaltung ist besonders raumsparend.

Um einen weiteren Stellparameter zu gewinnen und die Flexibilität der erfindungsgemäßen Vorrichtung zu erhöhen ist in einer abermals vorteilhaften Ausführungsform vorgesehen, dass der Neigungswinkel der Segmente der Rinnenanordnung gegenüber der Horizontalen jeweils verstellbar ist. Durch Einstellung der jeweiligen Winkel kann die Fließgeschwindigkeit des Kühlmittels bzw. der Pellets innerhalb des entsprechenden Segments verändert und somit dem jeweiligen Stoff angepasst werden. Gefriert beispielsweise der Stoff im Kontakt mit dem flüssigen Kühlmittel rasch durch, kann eine steiler abfallende Neigung gewählt werden, wodurch die Geschwindigkeit des durch das Segment geführten Stroms aus Kühlmittel und Pellets gesteigert und damit ein höherer Durchsatz erzielt werden kann. Neigen die erzeugten Pellets dazu, an der Rinnenanordnung anzuhaften, empfiehlt es sich, die Segmente steil abfallen zu lassen, um die Wirkung der Schwerkraft auf die Pellets zu erhöhen. Entsprechend können flacher abfallende Neigungen gewählt werden, wenn der zu pelletierende Stoff eine geringe Wärmeleitfähigkeit aufweist und daher eine größere Zeitdauer erforderlich ist, um das Gefrieren eines für den zuverlässigen Weitertransport hinreichend breiten Randes der Pellets zu gewährleisten.

Als geeignete Trenneinrichtung ist beispielsweise ein Transportband vorgesehen, mittels dessen im Betriebszustand der Vorrichtung die gefrorenen Pellets aus einem Sumpf des Kühlmediums abgefördert werden. In diesem Falle gelangt der Strom aus Kühlmittel und darin transportiertem pelletiertem oder granuliertem Stoff im Anschluss an die Rinnenanordnung in eine Aufnahmewanne ("Sumpf") aus der der pelletierte oder granulierte Stoff mittels des Förderbandes abgezogen wird. Freilich ist diese Ausführungsform mit dem Nachteil behaftet, dass bei der in die Vorrichtung hineinführenden Bewegung des Förderbandes die Gefahr besteht, dass es zu einem Eintrag von unerwünschten Stoffen kommt.

Als besonders bevorzugte Trenneinrichtung ist jedoch ein Vibrationssiebförderer vorgesehen. Dabei handelt es sich um ein geneigt angestelltes Sieb, das mittels eines geeigneten Antriebs in vertikale Schwingungen versetzt werden kann, wodurch die gefrorenen Pellets oder Granulate einerseits vom flüssigen kryogenen Kühlmittel befreit werden und andererseits in Richtung des Gefälles in einen dort vorgesehenen Aufnahmebehälter gefördert werden. Durch den Einsatz eines Vibrationsförderers ist es möglich, den granulierten oder pelletierten Stoff zumindest über einen gewissen Zeitraum im Wärmekontakt mit kaltem, verdampftem kryogenen Kühlmittel zu belassen, wodurch ein Teil der Gasenthalpie des Kühlmittels zur Kühlung genutzt werden kann. Ein weiterer Vorteil eines Vibrationssiebförderers ist eine gegenüber anderen Fördermitteln, wie beispielsweise dem vorerwähnten Förderband, verbesserte Hygiene, da es zu keiner in die Vorrichtung hinein laufenden Förderung kommt. Dadurch ist die erfindungsgemäße Vorrichtung besonders vorteilhaft für biologische und pharmazeutische Anwendungen einsetzbar.

Das kryogene Kühlmittel ist vorzugsweise ein kälteverflüssigtes Gas oder Gasgemisch, insbesondere kälteverflüssigter Stickstoff (LIN). Der zu pelletierende Stoff ist in der Regel flüssig oder pastös. Beispiele sind flüssige oder pastöse Zubereitungen für die Herstellung von Eiskrem oder anderer Lebensmittel sowie pharmazeutische und chemische Produkte, Hilfs- und Zusatzstoffe.

Bevorzugt sind zumindest Pelletiervorrichtung und Rinnenanordnung mit einer Wärmeisolierung ausgerüstet, die zweckmäßigerweise eine Einheit bilden, z. B. durch ein einheitliches oder zusammenhängendes wärmeisoliertes Gehäuse. Die Vorrichtung ist dabei bevorzugt auch im Bereich der Trenneinrichtung thermisch isoliert.

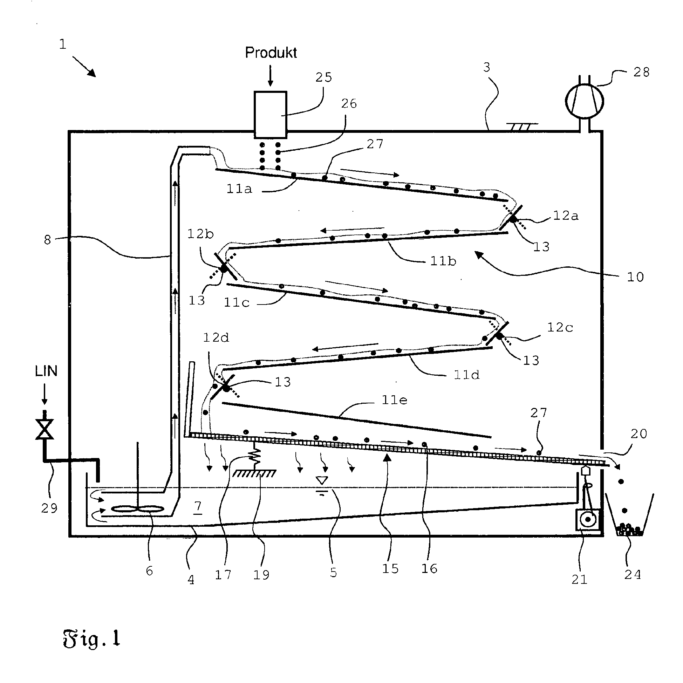

Ein Ausführungsbeispiel der Erfindung soll im Folgenden anhand der Zeichnung näher erläutert werden. Die einzige Zeichnung (Fig. 1) zeigt schematisch eine erfindungsgemäße Vorrichtung zum Pelletieren von flüssigen oder pastösen Stoffen.

Die in Fig. 1 gezeigte Vorrichtung 1 umfasst einen in einem wärmeisolierten Gehäuse 3 aufgenommenen Vorratsbehälter 4, in dem bis zu Höhe eines Füllstands 5 ein verflüssigtes kryogenes Kühlmittel 7, im Ausführungsbeispiel flüssiger Stickstoff (LIN), bevorratet wird. Mittels einer Fördereinrichtung 6 wird das verflüssigte kryogene Kühlmittel 7 aus dem Vorratsbehälter 4 über eine Förderstrecke 8 einer Rinnenanordnung 10 zugeleitet. Die Rinnenanordnung 10 umfasst eine Mehrzahl, im Ausführungsbeispiel fünf, Segmente 11a, 11b, 11c, 11d, 11e in Form jeweils zumindest nach unten (im geodätischen Sinne) geschlossener Rinnen, die übereinander angeordnet sind. Die Segmente 11a - 11e sind jeweils winklig gegenüber der Horizontalen angestellt, wobei übereinander angeordnete Segmente 11a-11b, 11b-11c, 11c-11d, 11d-11e in jeweils entgegengesetzter Richtung geneigt sind, sodass sich insgesamt ein Zick-Zack-förmiger Verlauf der Rinnenanordnung 10 ergibt. Die Segmente 11a -11e haben im Ausführungsbeispiel gleiche Neigungswinkel, es ist jedoch im Rahmen der Erfindung vorstellbar, dass die Segmente der Rinnenanordnung einer erfindungsgemäßen Vorrichtung jeweils unterschiedliche und/oder verstellbare Neigungswinkel gegenüber der Horizontalen aufweisen. Am Ende eines jeden der Segmente 11a, 11b, 11c, 11d ist jeweils eine Stellklappe 12a, 12b, 12c, 12d vorgesehen. Die Stellklappen 12a-12d sind jeweils an einem Scharnier 13 derart beweglich befestigt, das sie von einer ersten Stelllage (durchgezogene Linie der Stellklappen 12a, 12b und 12c; gestrichelte Linie der Stellklappe 12d), in der sie eine Strömungsverbindung zwischen zwei Segmenten 12a-12b, 12b-12d, 12c-12d, 12d-12e herstellen, in eine zweite Stelllage (gestrichelte Linie der Stellklappen 12a, 12b und 12c; durchgezogene Linie der Stellklappe 12d) verschwenkbar sind, in der die Strömungsverbindung zwischen den jeweiligen Segmenten 11a, 11b, 11c, 11d, 11e unterbrochen und damit der Kühlmittelstrom aus der Rinnenanordnung 10 ausgekoppelt wird. Die Verschwenkung kann dabei manuell oder mit Hilfe hier nicht gezeigter Motoren erfolgen.

Geodätisch unterhalb des untersten Segments 11e ist eine Trenneinrichtung 15 zum Trennen der erzeugten Pellets vom Kühlmittel vorgesehen. Die im Ausführungsbeispiel als Vibrationssiebförderer ausgebildete Trenneinrichtung 15 umfasst einen Siebboden 16, der mit Federmitteln 17 an einer hier nicht weiter interessierenden Konsole 19 befestigt ist. Der Siebboden 16 ist gegenüber der Horizontalen leicht in Richtung einer Auslassöffnung 20 im Gehäuse 3 geneigt angeordnet und kann mittels eines Rüttelwerks 21 in Vibration versetzt werden. Der Siebboden 16 ist so dimensioniert, dass er sowohl in seiner Länge aus auch in seiner Breite zu beiden Seiten über die Längserstreckung bzw. die Breite der Segmente 11a - 11e hinausgeht.

Außerhalb des Gehäuses 3 ist im Bereich der Auslassöffnung 20 ein Auffangbehälter 24 vorgesehen, der zur Aufnahme der erzeugten Pellets dient. Der Auffangbehälter 24 kann auch innerhalb des Gehäuses 3 angeordnet sein. Statt eines Auffangbehälters 24 kann auch eine Verpackungseinrichtung an dieser Stelle vorgesehen sein.

Der Eintrag des zu pelletierenden Stoffs (Produkt) erfolgt mittels einer Eintragvorrichtung 25, die oberhalb des Segments 11 a der Rinnenanordnung 10 angeordnet ist. Die Eintragvorrichtung 25 umfasst eine Düse oder eine Mehrzahl von Düsen, über die eine Abgabe des zu pelletierenden Stoffs in Form von Tropfen 26 ermöglicht wird. In der Rinnenanordnung 10 gefrieren die Tropfen 26 durch den thermischen Kontakt mit dem Kühlmittel zu Pellets 27. Eine Abluftgebläse 28 sorgt für die Absaugung des während des Pelletiervorgangs verdampfenden Kühlmittels sowie von etwaig in das Gehäuse 3 eingedrungener Umgebungsluft.

Beim Betrieb der Vorrichtung 1 wird flüssiges Kühlmittel 7 aus dem Vorratsbehälter 4 mittels der Fördereinrichtung 6 auf das oberste Segment 11a der Rinnenanordnung 10 gefördert und bildet dort einen laminaren Strom flüssigen Kühlmittels 7 aus. Aus der Eintragvorrichtung 25 wird der zu pelletierende Stoff aus das Rinnensegment 11a und damit in den dort fließenden Kühlmittelstrom eingetropft und von diesem bis zum anderen Ende des Segments 11a transportiert. Der die gefrierenden Tropfen (Pellets) 27 des Produkts transportierende Kühlmittelstrom durchläuft das Rinnensegment 11a und wird von der Stellklappe 12a auf das Rinnensegment 11b umgelenkt. Anschließend durchläuft der Strom aus Kühlmittel 7 und Pellets 27 das Rinnensegment 11b und wird von der Stellklappe 12b auf das Rinnensegment 11c umgeleitet. Ebenso erfolgt nach Durchlaufen des Rinnendsegments 11c ein Umleiten des Stroms aus Kühlmittel 7 und Pellets 27 mittels der Stellklappe 12c auf das Rinnensegment 11d. Da die Stellklappe 12d in dem in der Zeichnung gezeigten Beispiel auf Öffnungsposition gestellt ist, in der die Strömungsverbindung zum anschließenden Segment 11e unterbrochen ist, durchläuft der die Pellets 27 tragende Kühlmittelstrom anschließend nicht das Rinnensegment 11e, sondern fällt auf die Trenneinrichtung 15 hinab. In der Trenneinrichtung 15 werden die Pellets 27 vom Kühlmittel 7 getrennt; das flüssige Kühlmittel 7 fällt durch den Siebboden 16 in den Vorratsbehälter 4, während die Pellets 27 durch Betätigen des Rüttelwerks 21 zum Auslassöffnung 20 gefördert werden. Die im Idealfall vollständig durchgefrorenen Pellets 27 fallen in den Auffangbehälter 24 oder werden (hier nicht gezeigt) einer Verpackungseinrichtung oder einer Einrichtung zur Weiterverarbeitung zugeleitet.

Das beim thermischen Kontakt mit dem zu pelletierenden Stoff verdampfende Kühlmittel bildet im Innern des Gehäuses 3 eine trockene, kalte Atmosphäre aus, deren tiefe Temperatur zur Kühlung der Pellets 27 beiträgt. Die Leistung des Gebläses 28 ist so bemessen, dass im Innern des Gehäuses 3 ein leichter Überdruck gegenüber der Umgebung von beispielsweise zwischen 0,1 mbar und 1 mbar aufrecht erhalten wird, um das Eindringen von feuchter Umgebungsluft zu verhindern.

Der Füllstand 5 des flüssigen Kältemittels 7 im Vorratsbehälter 4 wird in hier nicht gezeigter Weise mittels einer Füllstandsmessung kontrolliert und automatisch aus einem hier nicht gezeigten Vorratstank über einen Zulauf 29 nachgefüllt.

Die effektive Rinnenlänge, also die Strecke, in der die Pellets 27 beim Durchlaufen der Rinnenanordnung 10 mit dem flüssigen kryogenen Kühlmittel in thermischen Kontakt stehen, kann durch die jeweilige Einstellung der Stellklappen 12a-12d geändert und damit den jeweiligen Erfordernissen angepasst werden. Die minimale effektive Rinnenlänge entspricht im Ausführungsbeispiel der Länge des Segments 11a, maximal umfasst die effektive Rinnenlänge die Summe der Längen aller Rinnensegmente 11a-11e. Über die Einstellung der Stellklappen kann so in einfacher Weise die Dauer des thermischen Kontakts von flüssigem Kühlmittel und Pellets 27 den jeweiligen Anforderungen angepasst werden.

Die erfindungsgemäße Vorrichtung ist zur Herstellung von Pellets oder Granulaten sowohl von Lebensmittels als auch von biologischen oder pharmazeutischen Präparaten geeignet.

Folgende Werte haben sich beispielsweise für eine Vorrichtung (Anlage) mit einer Kapazität von ca. 300 kg Pellets ergeben. Gefroren wird beispielsweise eine wässerige Suspension mit einem Feststoffanteil von 5 % zu Pellets von einem Durchmesser von ca. 6 mm. Als flüssiges Kühlmittel dient flüssiger Stickstoff. Die Strömungsgeschwindigkeit auf der Rinnenanordnung 10 beträgt dabei 0,5 Meter pro Sekunde. Die Rinnenanordnung besitzt dabei eine Breite von 1 Meter und eine effektive Rinnenlänge von 3 Metern. Der Verbrauch an flüssigem Stickstoff beträgt 3,0 kg pro Kilogramm erzeugtes Produkt (durchgefrorene Pellets). Die Verweilzeit der Pellets 27 in der Rinnenanordnung beträgt vorzugsweise ca. 30 Sekunden. Die Kerntemperatur der Pellets am Ende des Trennbereiches beträgt minus 20°C. Die Temperatur des Stickstoffgases (Abgas) im Bereich des Trennabschnitts beträgt ca. minus 185°C. Unmittelbar vor dem Abluftgebläse 28 beträgt die Temperatur des Stickstoffgases minus 40°C.

### Bezugzeichenliste

- 1: Vorrichtung
- 2: -
- 3: Gehäuse
- 4: Vorratsbehälter
- 5: Füllstand
- 6: Fördereinrichtung
- 7: verflüssigtes Kühlmittel
- 8: Förderstrecke
- 9: -
- 10: Rinnenanordnung
- 11a - 11e: Segmente der Rinnenanordnung
- 12a - 12d: Stellklappe
- 13: Scharnier
- 14: -
- 15: Trenneinrichtung
- 16: Siebboden
- 17: Federmittel
- 18: -
- 19: Konsole
- 20: Auslassöffnung
- 21: Rüttelwerk
- 22: -
- 23: -
- 24: Auffangbehälter
- 25: Eintragvorrichtung
- 26: Tropfen
- 27: Pellets
- 28: Abluftgebläse
- 29: Zulauf

## Patentansprüche

1. Vorrichtung zum Pelletieren oder Granulieren eines flüssigen oder pastösen Stoffes mit einem kryogenen Kühlmittel (7), mit einer Fördereinrichtung (6), mittels der das kryogene Kühlmittel (7) zu einer geneigten Rinnenanordnung (10) transportiert wird, einer Eintragvorrichtung (25), mittels der im Betriebszustand der Vorrichtung der zu pelletierende Stoff in die in den durch die Rinnenanordnung fließenden Strom des Kühlmittels eingetragen wird, und mit einer Trenneinrichtung (15) zum Trennen des pelletierten oder granulierten Stoffes vom Kühlmittel (7), wobei die Rinnenanordnung (10) aus in Strömungsrichtung des Kühlmittels aufeinanderfolgenden Segmenten (11a, 11b, 11c, 11d, 11e) aufgebaut ist **dadurch gekennzeichnet,**
**dass** jeweils zwischen zwei Segmenten (11a-11b, 11b-11c, 11c-11d, 11d-11e) der Rinnenanordnung eine Einrichtung (12a, 12b, 12c, 12d) zum Auskoppeln des pelletierten oder granulierten Stoffes aus der Rinnenanordnung (10) vorgesehen ist.

2. Vorrichtung nach Anspruch 1, **dadurch gekennzeichnet, dass** die Trenneinrichtung (15) in der Einrichtung (12a, 12b, 12c, 12d) zum Auskoppeln des pelletierten oder granulierten Stoffes integriert ist.

3. Vorrichtung nach Anspruch 1 oder 2, **dadurch gekennzeichnet, dass** als Einrichtung zum Auskoppeln eine Stellklappe (12a, 12b, 12c, 12d) vorgesehen ist.

4. Vorrichtung nach einem der vorhergehenden Ansprüche, **dadurch gekennzeichnet, dass** die Segmente (11a, 11b, 11c, 11d, 11e) der Rinnenanordnung (10) in einer Zick-Zack-förmigen Anordnung übereinander und vorgesehen sind.

5. Vorrichtung nach einem der vorhergehenden Ansprüche, **dadurch gekennzeichnet, dass** die Rinnenanordnung (10) als eine sich um eine im Wesentlichen vertikale Achse windende Spirale ausgebildet ist.

6. Vorrichtung nach einem der vorhergehenden Ansprüche, **dadurch gekennzeichnet, dass** der Neigungswinkel der Segmente (11a, 11b, 11c, 11d, 11e) der Rinnenanordnung (10) gegenüber der Horizontalen jeweils verstellbar ist.

7. Vorrichtung nach einem der vorhergehenden Ansprüche, **dadurch gekennzeichnet, dass** als Trenneinrichtung (15) ein Transportband vorgesehen ist, mittels dessen im Betriebszustand der Vorrichtung die gefrorenen Pellets (27) aus einem Sumpf des Kühlmediums abgefördert werden.

8. Vorrichtung nach einem der vorhergehenden Ansprüche, **dadurch gekennzeichnet, dass** als Trenneinrichtung (15) ein Vibrationssiebförderer vorgesehen ist.

9. Vorrichtung nach einem der vorhergehenden Ansprüche, **dadurch gekennzeichnet, dass** als flüssiges Kühlmittel (7) ein kälteverflüssigtes Gas oder Gasgemisch eingesetzt wird.

10. Vorrichtung nach einem der vorhergehenden Ansprüche, **dadurch gekennzeichnet, dass** die Eintragsvorrichtung (25) und/oder die Rinnenanordnung (10) und/oder die Trenneinrichtung (15) in einem thermisch isolierten Gehäuse (3) eingehaust ist.

## Claims

1. Apparatus for pelletizing or granulating a fluid or pasty material, with a cryogenic coolant (7), with a conveying device (6), by means of which the cryogenic coolant (7) is transported to an inclined gutter arrangement (10), with a feed device (25), by means of which, in the operating state of the apparatus, the material to be pelletized is fed into the coolant stream flowing through the gutter arrangement, and with a separating device (15) for separating the pelletized or granulated material from the coolant (7), the gutter arrangement (10) being constructed from segments (11a, 11b, 11c, 11d, 11e) succeeding one another in the direction of flow of the coolant, **characterized in that** a device (12a, 12b, 12c, 12d) for discharging the pelletized or granulated material from the gutter arrangement (10) is provided in each case between two segments (11a-11b, 11b-11c, 11c-11d, 11d-11e) of the gutter arrangement.

2. Apparatus according to Claim 1, **characterized in that** the separating device (15) is integrated in the device (12a, 12b, 12c, 12d) for discharging the pelletized or granulated material.

3. Apparatus according to Claim 1 or 2, **characterized in that** an actuating flap (12a, 12b, 12c, 12d) is provided as the discharge device.

4. Apparatus according to one of the preceding claims, **characterized in that** the segments (11a, 11b, 11c, 11d, 11e) of the gutter arrangement (10) are provided in a zigzag-shaped arrangement one above the other.

5. Apparatus according to one of the preceding claims, **characterized in that** the gutter arrangement (10) is formed as a spiral winding around an essentially vertical axis.

6. Apparatus according to one of the preceding claims, **characterized in that** the angle of inclination of the segments (11a, 11b, 11c, 11d, 11e) of the gutter arrangement (10) is in each case adjustable with respect to the horizontal.

7. Apparatus according to one of the preceding claims, **characterized in that** the separating device (15) provided is a conveyer belt, by means of which, in the operating state of the apparatus, the frozen pellets (27) are conveyed away out of a sump of the cooling medium.

8. Apparatus according to one of the preceding claims, **characterized in that** the separating device (15) provided is a vibrating screen conveyer.

9. Apparatus according to one of the preceding claims, **characterized in that** the liquid coolant (7) used is a cold-condensed gas or gas mixture.

10. Apparatus according to one of the preceding claims, **characterized in that** the feed device (25) and/or the gutter arrangement (10) and/or the separating device (15) are/is housed in a thermally insulated housing (3).

## Revendications

1. Dispositif de pelletisation ou de granulation d'une substance fluide ou pâteuse, comprenant un réfrigérant cryogénique (7), un dispositif de transport (6) au moyen duquel le réfrigérant cryogénique (7) est transporté jusqu'à un agencement de rigole incliné (10), un dispositif d'introduction (25) au moyen duquel, dans l'état de fonctionnement du dispositif, la substance à pelletiser est introduite dans le flux de réfrigérant s'écoulant à travers l'agencement de rigole, et un dispositif de séparation (15) pour séparer la substance pelletisée ou granulée du réfrigérant (7), l'agencement de rigole (10) étant constitué de segments (11a 11b, 11c, 11d, 11e) successifs dans la direction d'écoulement du réfrigérant,
**caractérisé en ce**
**qu'**à chaque fois entre deux segments (11a-11b, 11b-11c, 11c-11d, 11d-11e) de l'agencement de rigole est prévu un dispositif (12a, 12b, 12c, 12d) pour désaccoupler la substance pelletisée ou granulée de l'agencement de rigole (10).

2. Dispositif selon la revendication 1, **caractérisé en ce que** le dispositif de séparation (15) est intégré dans le dispositif (12a, 12b, 12c, 12d) pour désaccoupler la substance pelletisée ou granulée.

3. Dispositif selon la revendication 1 ou 2, **caractérisé en ce que** l'on prévoit en tant que dispositif pour désaccoupler un clapet de commande (12a, 12b, 12c, 12d).

4. Dispositif selon l'une quelconque des revendications précédentes, **caractérisé en ce que** les segments (11a, 11b, 11c, 11d, 11e) de l'agencement de rigole (10) sont prévus les uns au-dessus des autres dans un agencement en forme de zigzag.

5. Dispositif selon l'une quelconque des revendications précédentes, **caractérisé en ce que** l'agencement de rigole (10) est réalisé sous forme de spirale s'enroulant autour d'un axe essentiellement vertical.

6. Dispositif selon l'une quelconque des revendications précédentes, **caractérisé en ce que** l'angle d'inclinaison des segments (11a, 11b, 11c, 11d, 11e) de l'agencement de rigole (10) est à chaque fois réglable par rapport à l'horizontale.

7. Dispositif selon l'une quelconque des revendications précédentes, **caractérisé en ce que** l'on prévoit comme dispositif de séparation (15) une bande transporteuse au moyen de laquelle, dans l'état de fonctionnement du dispositif, les pellets congelés (27) sont évacués d'une cuve de réfrigérant.

8. Dispositif selon l'une quelconque des revendications précédentes, **caractérisé en ce que** l'on prévoit comme dispositif de séparation (15) un transporteur à tamis vibreur.

9. Dispositif selon l'une quelconque des revendications précédentes, **caractérisé en ce que** l'on utilise comme réfrigérant fluide (7) un gaz liquéfié ou un mélange de gaz liquéfié.

10. Dispositif selon l'une quelconque des revendications précédentes, **caractérisé en ce que** le dispositif d'introduction (25) et/ou l'agencement de rigole (10) et/ou le dispositif de séparation (15) sont logés dans un boîtier (3) isolé thermiquement.
